# EUROPÄISCHE PATENTSCHRIFT

(11) **EP 2 298 483 B1**
(45) Veröffentlichungstag und Bekanntmachung des Hinweises auf die Patenterteilung: **16.09.2015**
(21) Anmeldenummer: 10010181.5
(22) Anmeldetag: 22.09.2010
(51) Int. Cl.: B23D 77/00, B23C 5/00

(54) **Reibahle und System zu Feinbearbeitung von Bohrungen mit einer solchen Reibahle und einem Einsatz**
Reamer and system for the precise working of holes including such a reamer and an insert
Alésoir et système pour la finition de trous avec un tel alésoir et insert

(30) Priorität: 22.09.2009 DE 102009042436
(43) Veröffentlichungstag der Anmeldung: 23.03.2011
(73) Patentinhaber: Gühring OHG, 72458 Albstadt (DE)
(72) Erfinder: Schanz, Gerhard, 72393 Burladingen (DE)
(74) Vertreter: Meitinger, Thomas Heinz

(56) Entgegenhaltungen:
- EP-A1- 0 215 144
- WO-A1-01/58632
- WO-A1-03/101650
- WO-A1-2007/003248
- WO-A1-2007/147711
- WO-A2-2007/052250
- JP-A- 2004 237 401

## Beschreibung

### GEBIET DER ERFINDUNG

Die vorliegende Erfindung betrifft eine Reibahle zur Feinbearbeitung einer Bohrung sowie ein System zur Feinbearbeitung von Bohrungen, das eine solche Reibahle umfasst.

### HINTERGRUND DER ERFINDUNG

Im Stand der Technik sind Reibahlen bekannt, die zur Feinbearbeitung von Bohrungen dienen.

WO 2007/052250 offenbart eine Reibahle gemäß dem Oberbegriff des Anspruchs 1 mit einem Schneidkopf, einer Lagerbuchse, einem Schaftabschnitt und einer Verschlussschraube. In einem zusammengesetzten Zustand, in dem die Lagerbuchse mittels der Verschlussschraube in dem Schaftabschnitt der Reibahle eingeschraubt sind, umfasst ein zentraler Kühlmittelkanal folgendes:
- einen Hauptkanalabschnitt, der sich axial innerhalb der Lagerbuchse erstreckt,
- drei von dem Hauptkanalabschnitt abzweigende, parallel verlaufende Nebenkanalabschnitte,
- einen annulären Zwischenraum, der zwischen der Lagerbuchsenaußenfläche und der Hauptwand des Schaftkanals gebildet ist,
- einen Halsabschnitt des Schaftkanals,
- einen verschmalerten Abschnitt eines Werkzeugkopfkanals, der an der rückseitigen Oberfläche der Verschlussschraube endet, und
- sich radial auswärts erstreckende Nuten bzw. Durchlässe.

Die Verschlussschraube umfasst einen Schraubenkopf und einen sich von der rückwärtigen Seite des Schraubenkopfes erstreckenden Schraubenschaft, an dessen Ende ein Außengewinde vorgesehen ist. Dieses Dokument offenbart nicht, dass eine Nut mit einem ersten Abschnitt eines Kühlmittelkanals mit einem größeren Durchmesser verbunden ist, und auch nicht, dass der Schraubenschaft einen abgeflachten Bereich umfasst, der kein Außengewinde aufweist.

### ZUSAMMENFASSUNG DER ERFINDUNG

Reibahlen dienen der spanenden Feinbearbeitung von Bohrungen und weisen hierzu Schneiden auf, die für eine effiziente Bearbeitung des Werkstücks mit Kühl- und/oder Schmiermittel zu versorgen sind.

Es kann daher als eine Aufgabe der vorliegenden Erfindung betrachtet werden, eine effiziente Versorgung der Schneiden einer Reibahle mit Kühl- und/oder Schmiermittel sicher zu stellen.

Diese Aufgabe wird mit einer Reibahle gemäß dem unabhängigen Anspruch 1 gelöst. Weitere vorteilhafte Ausgestaltungen der Erfindung ergeben sich aus den Unteransprüchen.

Gemäß einem ersten Aspekt der Erfindung wird eine Reibahle zur Feinbearbeitung einer Bohrung zur Verfügung gestellt, wobei die Reibahle mit einem Einsatz verbunden werden kann und folgendes umfasst:
- eine Schneide zur spanenden Bearbeitung der Bohrung,
- einen axial verlaufenden Kühlkanal zur Leitung von Kühl- und/oder Schmiermittel, und
- eine radial verlaufende Nut, die mit dem Kühlkanal verbunden ist, wobei die Nut derart angeordnet ist, dass die Schneide mit Kühl- und/oder Schmiermittel versorgt werden kann,
wobei der Kühlkanal einen ersten Abschnitt mit einem ersten Durchmesser und einen zweiten Abschnitt mit einem zweiten Durchmesser umfasst, wobei der erste Durchmesser größer als der zweite Durchmesser ist,
wobei die Nut mit dem ersten Abschnitt verbunden ist, wobei der erste Abschnitt des Kühlkanals ein Innengewinde aufweist, in das der Einsatz mit einem entsprechenden Aussengewinde an seinem Schraubenschaft einschraubbar ist.

Erfindungsgemäß ist die Nut mit dem ersten Abschnitt verbunden und der erste Abschnitt ist zur Aufnahme eines Schraubenschafts des Einsatzes ausgebildet.

Gemäß einem zweiten Aspekt der Erfindung wird ein System zur Feinbearbeitung von Bohrungen bereitgestellt. Das System umfasst eine Reibahle gemäß dem ersten Aspekt und einen Einsatz, wobei die Reibahle und der Einsatz lösbar oder unlösbar miteinander verbindbar sind. Der Schraubenschaft umfasst ferner einen abgeflachten Bereich, der kein Außengewinde aufweist und der zur Aufnahme in dem ersten Abschnitt des Kühlkanals der Reibahle ausgebildet ist.

Die Herstellung einer Nut stellt fertigungstechnisch keine hohen Anforderungen. Das Anbringen einer Nut an der Vorderseite einer Reibahle kann z.B. durch einen einzelnen Fräsvorgang erfolgen. Durch das Anordnen einer Nut wird das zielgerichtete Leiten von Kühl- und/oder Schmiermittel ausgehend von einem zentralen Kühlkanal der Reibahle ermöglicht, wodurch eine effiziente Versorgung der Schneiden der Reibahle erzielt werden kann.

Zur Leitung von Kühl- und/oder Schmiermittel werden rundum geschlossene Kühlkanäle bevorzugt, da diese einen unnötigen Verlust an Kühl- und/oder Schmiermittel verhindern. Die Nut auf der Vorderseite der Reibahle wird daher durch eine Abdeckung zu einem Kühlkanal komplettiert. Hierzu wird der Einsatz mit der Reibahle verbunden, wodurch die offene Seite der Nut geschlossen wird. Diese Vorgehensweise ermöglicht eine fertigungstechnisch einfache Herstellung eines Kühlkanals, da der Kühlkanal aus einer einfach herzustellenden Nut und einer Abdeckung besteht. Hierdurch kann das fertigungstechnisch komplizierte Herstellen von Kühlkanälen durch Innenbohrungen vermieden werden.

Beispielhafte Ausführungsformen werden in den abhängigen Ansprüchen beschrieben.

Gemäß einer beispielhaften Ausführungsform der Erfindung wird eine Reibahle zur Verfügung gestellt, wobei ein Ende der Nut in der Nähe der Schneide angeordnet ist.

Durch die Anordnung des Endes der Nut in direkter Nachbarschaft zur Schneide wird das Kühl- und/oder Schmiermittel dorthin gefördert, wo es benötigt wird, nämlich zum arbeitenden Teil der Reibahle, der Schneide. Hierdurch wird eine effiziente und mengenmäßig ausreichende Versorgung der Schneide mit Kühl- und/oder Schmiermittel sichergestellt.

In einer weiteren erfindungsgemäßen Ausführungsform wird eine Reibahle zur Verfügung gestellt, wobei die Reibahle umfasst: eine erste Mehrzahl an Schneiden zur spanenden Bearbeitung der Bohrung und eine zweite Mehrzahl an Nuten, wobei die Nuten derart angeordnet sind, dass jede Schneide durch mindestens eine Nut mit Kühl- und/oder Schmiermittel versorgt werden kann.

Die Versorgung jeder Schneide der Reibahle mit mindestens einer Nut führt zu einer zielgerichteten und ausreichenden Versorgung der Schneiden mit Kühl- und/oder Schmiermittel.

Gemäß einem weiteren Ausführungsbeispiel der vorliegenden Erfindung wird eine Reibahle zur Verfügung gestellt, wobei der axial verlaufende Kühlkanal zentral angeordnet ist.

Die Verbindung zwischen einem Einsatz, der zur Komplettierung der Nut zum Kühlkanal dient, und der Reibahle kann in einem ersten Abschnitt des Kühlkanals hergestellt werden, wobei die Verbindung z.B. als Schraubverbindung ausgebildet sein kann. Der erste Abschnitt des Kühlkanals sollte in diesem Fall einen größeren Querschnitt als der zweite Abschnitt aufweisen, um einen Stau an Kühl- und/oder Schmiermittel im zweiten Abschnitt des Kühlkanals zu verhindern. Durch einen ersten Abschnitt mit ausreichend großem Querschnitt wird daher die ausreichende Versorgung der Schneide der Reibahle sichergestellt.

In den Ausführungsformen der Erfindung wird das Herstellen von Kühlkanälen durch eine Kombination von Nuten und einer Abdeckung erreicht. Dies vermeidet das ansonsten notwendige Herstellen von Innenbohrungen, um zu demselben Ergebnis zu gelangen, nämlich eine effiziente und zielgerichtete Versorgung von Schneiden einer Reibahle mit Kühl- und/oder Schmiermittel.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 eine Reibahle in einer perspektivischen Ansicht,
Fig. 2 die Reibahle aus Fig. 1 in einer Vorderansicht,
Fig. 3 die Reibahle aus Fig. 1 in einer Seitenansicht,
Fig. 4 eine weitere Reibahle in einer Seitenansicht,
Fig. 5 den Schnitt B-B nach Fig. 4,
Fig. 6 eine weitere Reibahle in einer Seitenansicht,
Fig. 7 ein schneidender Abschnitt der Reibahle aus Fig. 6,
Fig. 8 die Reibahle aus Fig. 6 in einer Vorderansicht,
Fig. 9 den Schnitt A-A nach Fig. 8,
Fig. 10 eine Kühlmittelschraube in einer Rückansicht,
Fig. 11 die Kühlmittelschraube aus Fig. 10 in einer Seitenansicht,
Fig. 12 eine Kühlmittelschraube in einer Vorderansicht,
Fig. 13 den Schnitt C-C nach Fig. 10,
Fig. 14 den Schnitt D-D nach Fig. 10,
Fig. 15 eine weitere Reibahle in einer Vorderansicht, und
Fig. 16 noch eine weitere Reibahle in einer Vorderansicht.

### DETAILLIERTE BESCHREIBUNG BEISPIELHAFTER AUSFÜHRUNGSFORMEN

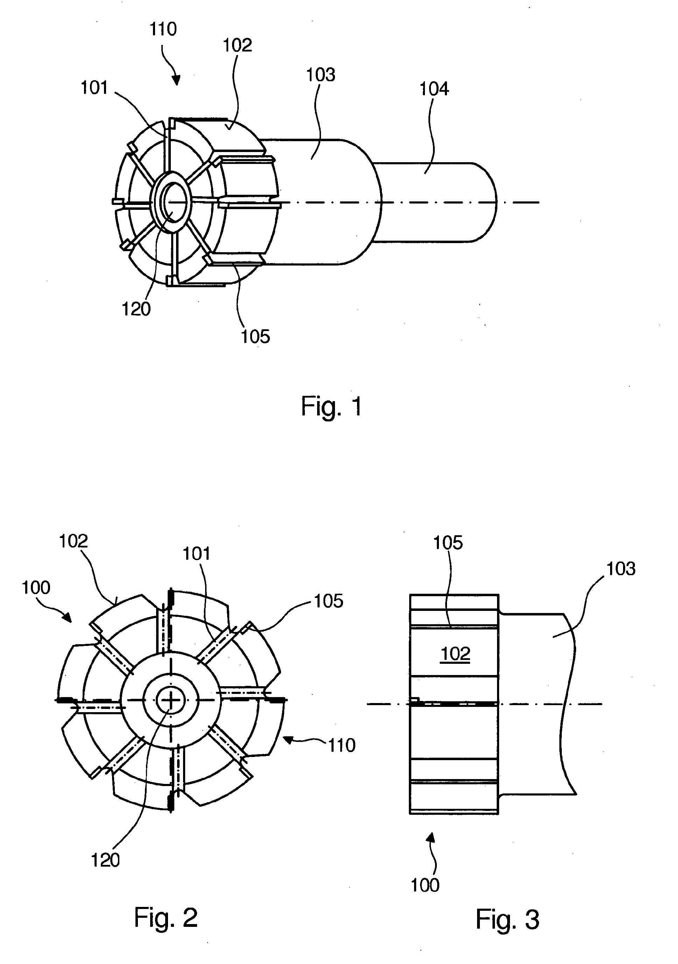

Fig. 1 zeigt eine Reibahle 100 in einer perspektivischen Ansicht. Die Reibahle 100 weist an ihrem Kopf 110 Nuten 101 auf, die radial vom Mittelpunkt ausgehend nach außen verlaufen, wobei in einer besonderen Ausführung der Erfindung die Nuten 101 direkt vor den Schneiden 105 der Reibahle 100 enden. Die Nuten 101 führen vom Mittelpunkt zum äußeren Umfang des Kopfs 110 der Reibahle 100, wobei im Mittelpunkt der Reibahle 100 ein zentraler Kühlkanal 120 endet, der axial entlang der Reibahle verläuft. Die Nuten 101 sind mit dem zentralen Kühlkanal 120 verbunden. Die Reibahle 100 kann am zweiten Schaftabschnitt 104 in ein Werkzeugfutter (nicht gezeigt) eingespannt werden. Die Nuten 101 dienen zum Führen von Kühl- und/oder Schmiermittel, wobei die offenen Seiten der Nuten 101 durch eine Abdeckung geschlossen werden können, wodurch sich Kühlkanäle ergeben. Mittels der Kühlkanäle kann Kühl- und/oder Schmiermittel verlustfrei und zielgenau zu den Schneiden 105 der Reibahle 100 gefördert werden.

Fig. 2 zeigt die Reibahle 100 in einer Vorderansicht mit Nuten 101, die ausgehend vom Zentrum der Reibahle 100 radial nach außen verlaufen und vorzugsweise vor den Schneiden 105 der Reibahle 100 enden. Im Zentrum der Reibahle 100 endet der axial verlaufende Kühlkanal 120 durch den die Nuten 101 mit Kühl- und/oder Schmiermittel versorgt werden können.

Fig. 3 zeigt in einer Seitenansicht die Reibahle 100 mit dem ersten Schaftabschnitt 103, der zur Aufnahme in einem Werkzeugfutter ausgebildet sein kann, und der Schneide 105 sowie der Freifläche 102 zur Abführung von z.B. Spänen und überschüssigem Kühl- und/oder Schmiermittel.

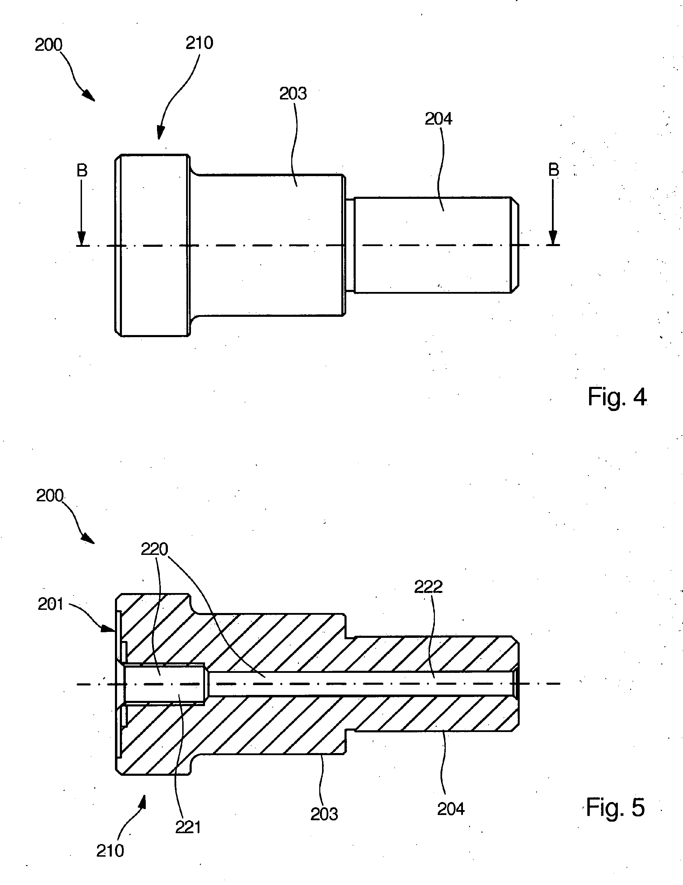

Fig. 4 zeigt eine weitere Reibahle 200 mit einem Reibahlenkopf 210 und einem ersten Schaftabschnitt 203 und einem zweiten Schaftabschnitt 204 zum Einspannen der Reibahle 200 in ein Werkzeugfutter (nicht gezeigt).

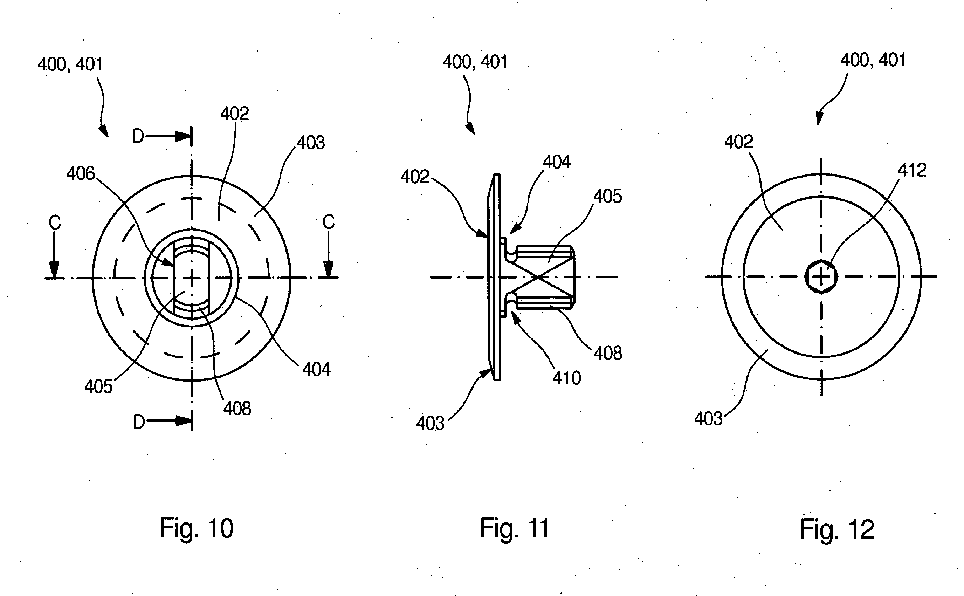

Fig. 5 zeigt den Schnitt B-B nach Fig. 4 mit einem axial verlaufenden Kühlkanal 220 zum Leiten von Kühl- und/oder Schmiermittel ausgehend von einer Motorspindel (nicht gezeigt) einer Bearbeitungsmaschine (nicht gezeigt). Der Kühlkanal 220 umfasst einen Bereich 221 mit größerem Querschnitt, der ein Innengewinde aufweist, damit in diesen Bereich 221 eine Kühlmittelschraube 401 eingeschraubt werden kann. Die Kühlmittelschraube 401 (siehe Figuren 10 bis 14) dient zur Abdeckung der Nuten 201, wodurch sich radial verlaufende geschlossene Kühlkanäle ergeben. Die Nuten 201 der Reibahle 200 verlaufen radial vom Mittelpunkt der Reibahle 200 nach außen.

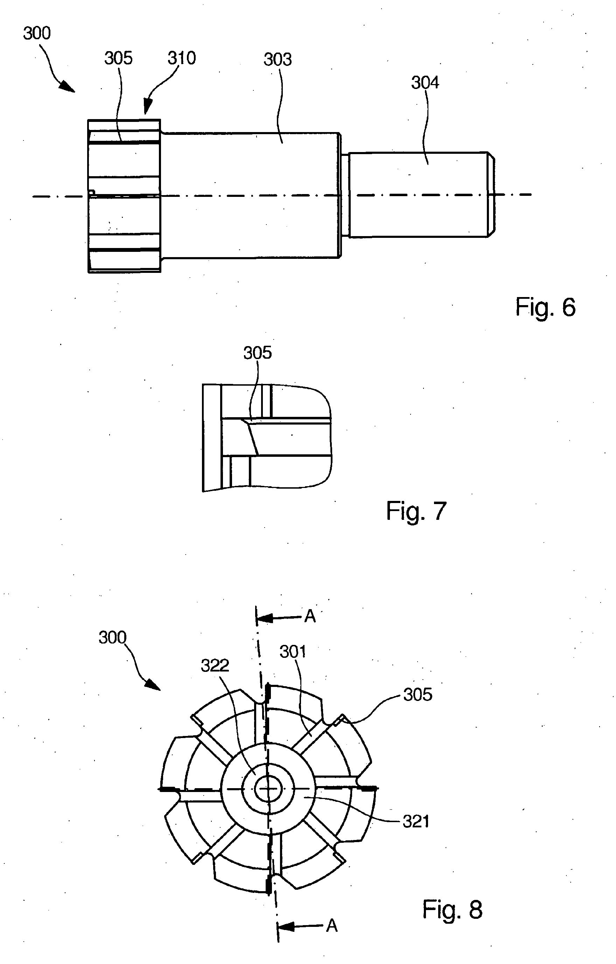

Fig. 6 zeigt eine weitere Reibahle 300 in einer Seitenansicht mit einer Schneide 305 und einem ersten Schaftabschnitt 303 und einem zweiten Schaftabschnitt 304 zum Einspannen in ein Werkzeugfutter (nicht gezeigt).

Fig. 7 zeigt die Schneide 305 der Reibahle 300.

Fig. 8 zeigt die Reibahle 300 in einer Vorderansicht mit Nuten 301, die von einer zentralen Innenbohrung (einem Bereich 321 mit großem Durchmesser des Kühlkanals 320) radial zum äußeren Umfang der Reibahle 300 führen und vor den Schneiden 305 der Reibahle 300 enden. Die zentrale Innenbohrung verläuft axial entlang der Reibahle 300, wobei die Innenbohrung in einem vorderen Bereich 321 einen größeren Durchmesser bzw. Querschnitt als in einem hinteren Bereich 322 aufweist. Der Kühlkanal 320 dient zum Leiten von Kühl- und/oder Schmiermittel und der vordere Bereich 321 mit größerem Durchmesser dient zur lösbaren Verbindung mit einer Kühlmittelschraube 401. Zur Verbindung dient der vordere Bereich 321, der z.B. mit einem Innengewinde versehen sein kann.

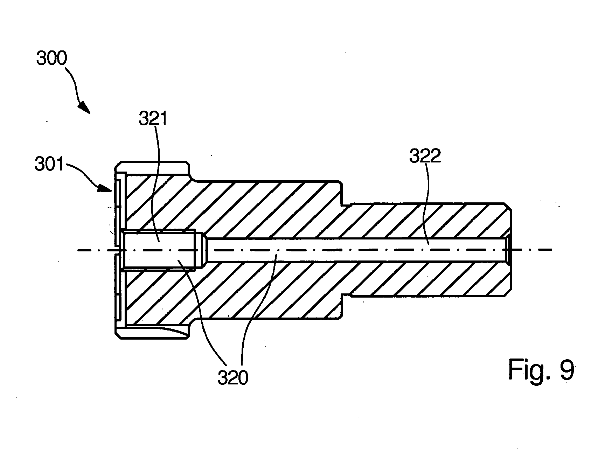

Fig. 9 zeigt den Schnitt A-A nach Fig. 8 mit einem zentral angeordneten Kühlkänal 320, der Kühl- und/oder Schmiermittel zu den Schneiden 305 der Reibahle 300 führt. Der Kühlkanal 320 kann einen Abschnitt 321 mit einem größeren Durchmesser aufweisen, wobei der Abschnitt 321 auch dazu dient, eine Verbindung mit einem als Kühlmittelschraube 401 ausgebildeten Einsatz 400 (siehe Figuren 10 bis 14) durch z.B. eine Schraubverbindung herzustellen. Der Abschnitt 321 weist hierzu ein Innengewinde auf.

Fig. 10 zeigt als Ausführungsform eines Einsatzes 400 eine Kühlmittelschraube 401 in einer Rückansicht mit einem Schraubenkopf 402, wobei der Schraubenkopf 402 einen abgeflachten Randbereich 403 aufweist, um in der Nachbarschaft der Schneiden einer Reibahle z.B. Platz für Späne zu schaffen. Dargestellt ist ferner eine umlaufende Stufe 404, die als Anschlag beim Einschrauben der Kühlmittelschraube 401 in die Reibahle 300 (siehe Fig. 9) dienen kann. Die Kühlmittelschraube 401 weist einen Schraubenschaft 405 auf, der ein Außengewinde 408 aufweist, um in die Reibahle 300 eingeschraubt werden zu können. Außerdem weist der Schraubenschaft 405 der Kühlmittelschraube 401 abgeflachte Bereiche 406 auf, an denen im eingeschraubten Zustand das Kühl- und/oder Schmiermittel vorbeifließen kann, um zu den Nuten der Reibahle zu gelangen. Aufgrund der abgeflachten Bereiche 406 verschließt der Schraubenschaft 405den zentralen Kühlkanal 320 der Reibahle 300 nicht vollständig, wodurch eine Versorgung der Nuten 301 der Reibahle 300 mit Kühl- und/oder Schmiermittel sichergestellt werden kann. Der zentrale Kühlkanal 320 der Reibahle 300 weist vorzugsweise im Bereich 321 der Verbindung mit der Kühlmittelschraube 401 im Vergleich zum restlichen Kühlkanal 320 einen größeren Durchmesser auf, um eine Versorgung der Schneiden 305 der Reibahle 300 mit Kühl- und/oder Schmiermittel in ausreichender Menge sicher zu stellen.

Fig. 11 zeigt die Kühlmittelschraube 401 in einer Seitenansicht mit dem Schraubenschaft 405, wobei der Schraubenschaft 405 ein Außengewinde 408 aufweist. Der Schraubenkopf 402 der Kühlmittelschraube 401 weist einen äußeren abgeflachten Randbereich 403 auf, um Raum für z.B. Späne zu schaffen. Dargestellt ist ferner die rund umlaufende Stufe 404, die als Anschlag beim Einsetzen bzw. Einschrauben der Kühlmittelschraube 401 in die Reibahle 300 dient. Die Kühlmittelschraube401 weist eine rund umlaufende Einschnürung 410 auf, wodurch sichergestellt wird, dass die Kühlmittelschraube 401 mit der Stufe 404 auf der Reibahle 300 aufsitzt.

Die Kühlmittelschraube 401 mit ihrem Schraubenkopf 402 dient zur Abdeckung der offenen Seiten der Nuten 301 der Reibahle 300, wodurch sich geschlossene Kühlkanäle zur Führung von Kühl- und/oder Schmiermittel ergeben. Der Schraubenkopf 402 führt also dazu, dass in Kombination mit den Nuten 301 der Reibahle 300 sich Kühlkanäle ergeben, wodurch Kühlund/oder Schmiermittel direkt vor die Schneiden 305 der Reibahle 300 geführt werden kann, ohne dabei Verluste an Kühl- und/oder Schmiermittel durch seitliche Öffnungen (wie z.B. bei Nuten) in Kauf nehmen zu müssen. Hierdurch wird eine effiziente und zielgerichtete Versorgung der Schneiden 305 der Reibahle 300 mit Kühl- und/oder Schmiermittel sichergestellt. Vorteilhafterweise müssen zur Herstellung der geschlossenen Kühlkanäle keine aufwändigen Innenbohrungen vorgenommen werden, sondern es genügt, einfach anzubringende Nuten an der Reibahle durch z.B. Fräsen anzuordnen, die in Kombination mit einer Abdeckung, z.B. einer Kühlmittelschraube, Kühlkanäle ergeben.

Fig. 12 zeigt die Kühlmittelschraube 401 in einer Vorderansicht mit einer Vertiefung 412, die z.B. als Innensechskant ausgebildet sein kann, um die Kühlmittelschraube 401 in die Reibahle 300 einschrauben zu können. Die Kühlmittelschraube 401 umfasst den Schraubenkopf 402, wobei der Schraubenkopf 402 einen rund umlaufenden abgeflachten Randbereich 403 aufweist.

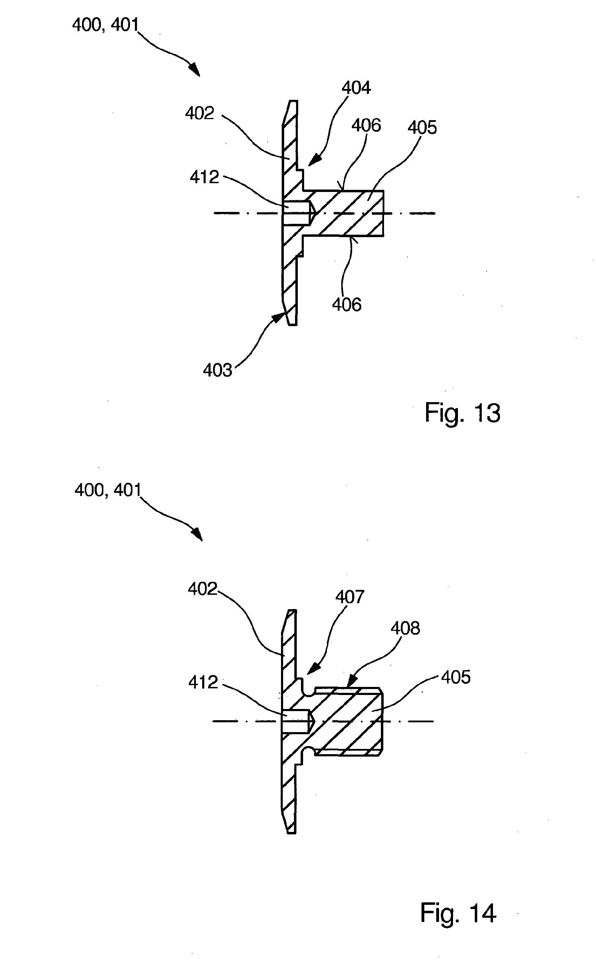

Fig. 13 zeigt den Schnitt C-C nach Fig. 10 der Kühlmittelschraube 401 mit dem Schraubenschaft 405, wobei die abgeflachten Bereiche 406 des Schraubenschaftes 405 dargestellt sind. Die abgeflachten Bereiche 406 des Schraubenschaftes 405 weisen kein Außengewinde auf, da die Abflachungen dazu dienen sollen, einen Spalt zwischen Schraubenschaft 405 der Kühlmittelschraube 401 und der Innenbohrung (dem Kühlkanal) der Reibahle herzustellen, durch den Kühl- und/oder Schmiermittel vom Kühlkanal der Reibahle kommend vorbei fließen kann. Die Kühlmittelschraube weist eine rund umlaufende Stufe 404 auf, die als Anschlag beim Einsetzen bzw. Einschrauben der Kühlmittelschraube 401 in die Reibahle dienen kann. Der Schraubenkopf 402 der Kühlmittelschraube 401 umfasst einen äußeren abgeflachten Randbereich 403 und eine Vertiefung 402 zum Eingreifen z.B. eines Steckschlüssels, um die Kühlmittelschraube 401 z.B. in eine Reibahle einschrauben zu können. Die Vertiefung 412 kann z.B. als Innensechskant ausgebildet sein.

Fig. 14 zeigt den Schnitt D-D nach Fig. 10 mit dem Schraubenschaft 405, wobei die nicht abgeflachten Bereiche 406 des Schraubenschaftes 405 dargestellt sind. Der Schraubenschaft 405 weist ein Außengewinde 408 auf, das zur lösbaren Verbindung der Kühlmittelschraube 401 mit einer Reibahle genutzt werden kann. Dargestellt ist auch die Stufe 407, die als Anschlag beim Einschrauben der Kühlmittelschraube 401 in die Reibahle dient. Der Schraubenkopf 402 der Kühlmittelschraube 401 umfasst in einem äußeren Bereich Abflachungen 406, um Freiraum für Späne zu schaffen. Die Kühlmittelschraube 401 kann mit Hilfe einer Vertiefung 412, die z.B. als Innensechskant ausgebildet sein kann, in die Reibahle eingeschraubt werden.

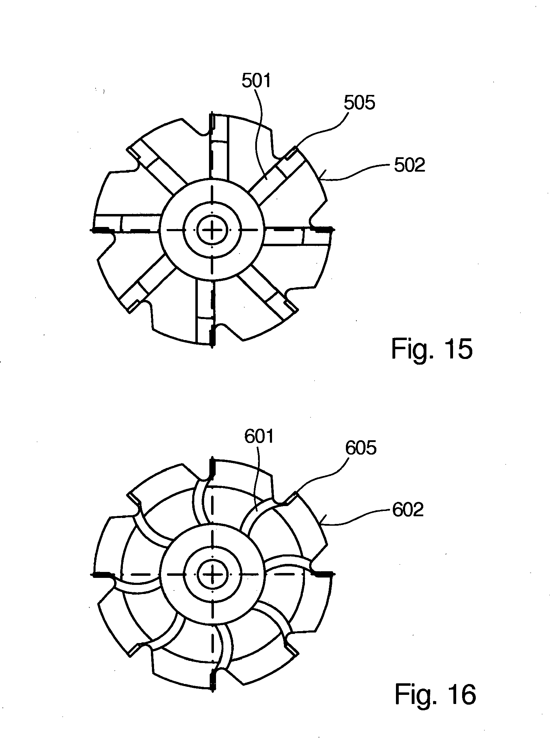

Fig. 15 zeigt eine Stirnseite einer weiteren Reibahle 500 mit einer sich radial nach außen aufweitenden Nut 501 zum Führen von Kühl- und/oder Schmiermittel, wobei das Kühlund/oder Schmiermittel großflächig zur Schneide 505 geleitet werden kann.

Fig. 16 zeigt eine weitere alternative Ausführungsform einer Stirnseite einer noch weiteren Reibahle 600 mit einer gebogenen Nut 601, die kurvenförmig ausgeführt ist, wodurch durch die Rotation der Reibahle 600 im Einsatz das Kühl- und/oder Schmiermittel zur Schneide 605 geschleudert werden kann.

### LISTE DER BEZUGSZEICHEN

- 100: Reibahle
- 101: Nut
- 102: Freifläche
- 103: erster Schaftabschnitt
- 104: zweiter Schaftabschnitt
- 105: Schneide
- 110: Kopf
- 120: Kühlkanal
- 200: Reibahle
- 201: Nut
- 203: erster Schaftabschnitt
- 204: zweiter Schaftabschnitt
- 205: Schneide
- 210: Kopf der Reibahle
- 220: Kühlkanal mit großem Durchmesser
- 221: Bereich mit großem Durchmesser
- 222: Bereich mit kleinem Durchmesser
- 300: Reibahle
- 301: Nut
- 303: erster Schaftabschnitt
- 304: zweiter Schaftabschnitt
- 305: Schneide
- 310: Kopf
- 320: Kühlkanal
- 321: Bereich mit großem Durchmesser
- 322: Bereich mit kleinem Durchmesser
- 400: Einsatz
- 401: Schraube, Kühlmittelschraube
- 402: Schraubenkopf
- 403: abgeflachter Randbereich
- 404: Stufe
- 405: Schraubenschaft
- 406: abgeflachter Bereich
- 407: Stufe
- 408: Außengewinde
- 410: Einschnürung
- 412: Vertiefung
- 500: Reibahle
- 501: Nut
- 502: Freifläche
- 505: Schneide
- 600: Reibahle
- 601: Nut
- 602: Freifläche
- 605: Schneide

## Patentansprüche

1. Reibahle (100; 200; 300; 500; 600) zur Feinbearbeitung einer Bohrung, wobei die Reibahle (100; 200; 300; 500; 600) mit einem Einsatz (400) verbunden werden kann und folgendes umfasst:
- eine Schneide (105; 205; 305; 505; 605) zur spanenden Bearbeitung der Bohrung,
- einen axial verlaufenden Kühlkanal (120; 220; 320) zur Leitung von Kühl- und/oder Schmiermittel, und
- eine radial verlaufende Nut (101; 201; 301; 501; 601), die mit dem Kühlkanal (120; 220; 320) verbunden ist, wobei die Nut (101; 201; 301; 501; 601) derart angeordnet ist, dass die Schneide (105; 205; 305; 505; 605) mit Kühl- und/oder Schmiermittel versorgt werden kann,
wobei der Kühlkanal (120; 220; 320) einen ersten Abschnitt (121; 221; 321) mit einem ersten Durchmesser und einen zweiten Abschnitt (122; 222; 322) mit einem zweiten Durchmesser umfasst, wobei der erste Durchmesser größer als der zweite Durchmesser ist,
wobei die Nut (101; 201; 301; 501; 601) mit dem ersten Abschnitt (121; 221; 321) verbunden ist, **dadurch gekennzeichnet, dass** der erste Abschnitt (121; 221; 321) ein Innengewinde aufweist, in das der Einsatz mit einem entsprechenden Aussengewinde (4408) an seinem Schraubenschaft einschraubbar ist.

2. Reibahle (100; 200; 300; 500; 600) nach Anspruch 1, wobei ein Ende der Nut (101; 201; 301; 501; 601) in der Nähe der Schneide (105; 205; 305; 505; 605) angeordnet ist.

3. Reibahle (100; 200; 300; 500; 600) nach Anspruch 1 oder 2, mit
einer ersten Mehrzahl an Schneiden (105; 205; 305; 505; 605) zur spanenden Bearbeitung der Bohrung und
einer zweiten Mehrzahl an Nuten (101; 201; 301; 501; 601), die derart angeordnet sind, dass jede Schneide (105; 205; 305; 505; 605) durch mindestens eine Nut (101; 201; 301; 501; 601) mit Kühl- und/oder Schmiermittel versorgt werden kann.

4. Reibahle (100; 200; 300) nach einem der vorhergehenden Ansprüche, wobei der axial verlaufende Kühlkanal (120; 220; 320) zentral angeordnet ist.

5. System zur Feinbearbeitung von Bohrungen, mit
einer Reibahle (100; 200; 300; 500; 600) nach einem der Ansprüche 1 bis 4 und
einem Einsatz (400) zum Verbinden mit der Reibahle (100; 200; 300; 500; 600), wobei der Einsatz (400) folgendes umfasst:
eine Schraube (401) mit
einem Schraubenkopf (402) mit abgeflachtem Randbereich (403) und
einem Schraubenschaft (405) mit einem Außengewinde (408),
eine rundumlaufende Stufe (404), die als Anschlag beim Einschrauben der Schraube (401) in die Reibahle (300) dient,
sowie eine rund umlaufende Einschnürung (410), die sicherstellt, dass die Schraube (401) mit der Stufe (404) auf der Reibahle (300) aufsitzt,
wobei der Einsatz (400) derart ausgebildet ist, dass der Schraubenkopf (402) der Schraube (401) mit der Nut der Reibahle (300) einen Kühlkanal bilden kann,
wobei der Schraubenschaft (405) ferner einen abgeflachten Bereich (406) umfasst, der kein Außengewinde aufweist, und wobei
der Schraubenschaft (405) zur Aufnahme in dem ersten Abschnitt (121; 221; 321) des Kühlkanals (120; 220; 320) der Reibahle (100; 200; 300) geeignet ist.

6. System nach Anspruch 6, wobei bei dem Einsatz (400) das Außengewinde (4408) des Schraubenschafts (405) dazu geeignet ist, in das Innengewinde des ersten Abschnitts (121; 221; 321) der Reibahle (100; 200; 300) einschraubbar zu sein.

## Claims

1. Reamers (100, 200, 300, 500, 600) for precision bore machining, whereby the reamers (100, 200, 300, 500, 600) can be connected with an insert (400) and comprise the following:
- a glade (105, 205, 305, 505, 605) for the machine processing of the bore;
- an axial cooling channel (120, 220, 320) for conducting coolants and/or lubricants, as well as
- a radial groove (101, 201, 301, 501, 601), that is connected to the cooling channel (120, 220, 320), whereby the groove (101, 201, 301, 501, 601) is arranged so the blade (105, 205, 305, 505, 605) can be supplied with coolant and/or lubricant;
whereby the cooling channel (120, 220, 320) has a first segment (121; 221; 321) with the first bore and the second segment (122; 222; 322) has a second bore; whereby the first bore is larger than the second bore;
whereby the groove (101, 201, 301, 501, 601) is connected with the first segment (121, 221, 321), **characterized in that** the first segment (121, 221,321) features an internal thread, by which the insert of a corresponding external thread (4408) can be screwed to its screw hole.

2. Reamers (100, 200, 300, 500, 600) according to claim 1, whereby one end of the groove (101, 201, 301, 501, 601) is arranged in close vicinity to the blade (105, 205, 305, 505, 605).

3. Reamers (100, 200, 300, 500, 600), according to claim 1 or 2, with the first plurality of blades (105, 205, 305, 505, 605) for precision bore machining and the second plurality of grooves (101, 201, 301, 501, 601), which are arranged so that each blade (105, 205, 305, 505, 605) can be supplied with coolant or lubricant by at least one groove (101, 201, 301, 501, 601).

4. Reamers (100, 200, 300), according to any of the preceding claims, whereby the axial cooling channel (120; 220; 320), is arranged centrally.

5. System for precision bore machining with
one of the reamers (100, 200, 300, 500, 600), according to claims 1 through 4, to be connected to the reamer (100, 200, 300, 500), whereby the insert (400) comprises:
a screw (401) with
a screw head (402) with a flattened area (403) and
a screw hole (405) with an external thread (408)
a circular surface (410), which serves as a stop when screwing (401) in the reamer (300);
a circumferential constriction (410), which ensures that the screw (401) is secured to the surface (410) in the reamer (300);
whereby the insert (400) is configured so that the head (402) of the screw (401) with the groove of the reamer (300) can form a cooling channel;
whereby the screw hole (405) further comprises a flat portion with no external thread and the screw hole receives the first segment (121, 221,321) from the cooling channel (120, 200, 320), which is suitable for the reamer (100, 200, 300).

6. System according to claim 6, whereby the insert (400) is connected to the external thread (4408) of the screw hole (405). The internal thread of the first segment (121, 221, and 321) is to be attached to the reamer.

## Revendications

1. Alésoir (100, 200, 300, 500, 600) pour finition d'alésage où l'alésoir (100, 200, 300, 500, 600) peut être relié par l'insert (400) et comprend les éléments suivants :
- une lame (105, 205, 305, 505, 605) pour l'usinage de l'alésage ;
- un canal axial de refroidissement (120, 220, 320) pour l'écoulement du liquide de refroidissement et/ou du lubrifiant, et
- une rainure radiale (101, 201, 301, 501, 601) reliée à un canal de refroidissement (120, 220, 320) où la rainure (101, 201, 301, 501, 601) est positionnée de telle sorte que la lame (105, 205, 305, 505, 605) puisse être alimentée en liquide de refroidissement et/ou lubrifiant ;
où le canal de refroidissement (120, 220, 320) a une première partie (121, 221, 321) avec un premier trou et une deuxième partie (122, 222, 322) avec un deuxième trou ; le premier trou étant plus grand que le deuxième ;
où la rainure (101, 201, 301, 501, 601) est reliée à la première partie (121, 221, 321) et **caractérisée en ce que** la première partie (121, 221, 321) a un filetage intérieur dans lequel l'insert peut être vissé avec le filetage extérieur correspondant (4408) sur sa tige de vis.

2. Alésoir (100, 200, 300, 500, 600) selon la revendication 1, où une extrémité de la rainure (101, 201, 301, 501, 601) est placée à côté de la lame (105, 205, 305, 505, 605).

3. Alésoir (100, 200, 300, 500, 600) selon la revendication 1 ou 2, avec un premier ensemble de lames (105, 205, 305, 505, 605) pour l'usinage de l'alésage et un deuxième ensemble de rainures (101, 201, 301, 501, 601), qui sont disposées de telle sorte que chaque lame (105, 205, 305, 505, 605) soit alimentée au moins par une rainure (101, 201, 301, 501, 601) en liquide de refroidissement et/ou en lubrifiant.

4. Alésoir (100, 200, 300) selon l'une des revendications précédentes, où le canal de refroidissement axial (120, 220, 320) se trouve au centre.

5. Système de finition d'alésage avec
un alésoir (100, 200, 300, 500, 600) selon l'une des revendications 1 à 4, et
un insert (400) pour la jonction avec l'alésoir (100, 200, 300, 500, 600) où l'insert (400) comprend ce qui suit :
une vis (401) avec
une tête de vis (402) avec une bordure aplatie (403) et
une tige de vis (405) avec un filetage extérieur (408),
un rebord sur tout le pourtour (404), qui sert de butée lors du vissage de la vis (401) dans l'alésoir (300)
et un col sur le pourtour (410), qui permet de fixer la vis (401) avec le rebord (404) dans l'alésoir (300),
où l'insert (400) est configuré de telle sorte que la tête (402) de la vis (401) puisse former avec la rainure de l'alésoir (300) un canal de refroidissement,
où la tige de vis (405) comprend en outre une section aplatie (406) qui n'a pas de filetage extérieur, et où
la tige de la vis (405) est adaptée pour servir de réceptacle dans la première section (121, 221, 321) du canal de refroidissement (120, 220, 320) de l'alésoir (100, 200, 300).

6. Système selon la revendication 6, où dans l'insert (400) le filetage externe (4408) de la tige de vis (405) est adapté pour être visé dans le filetage intérieur de la première section (121, 221, 321) de l'alésoir.
